# EUROPÄISCHE PATENTANMELDUNG

(11) **EP 3 826 045 A1**
(43) Veröffentlichungstag der Anmeldung: **26.05.2021**
(21) Anmeldenummer: 21151882.4
(22) Anmeldetag: 21.08.2006
(51) Int. Cl.: H01H 33/66, B29C 45/14

(54) **VERFAHREN ZUR HERSTELLUNG VON SCHALTERPOLTEILEN FÜR MITTEL- UND HOCHSPANNUNGSSCHALTER**

(30) Priorität: 22.08.2005 DE 102005039555
(62) Teilanmeldung aus: 06776985.1
(71) Anmelder: ABB Schweiz AG, 5400 Baden (CH)
(72) Erfinder: CLAUS, Oliver, 40885 Ratingen (DE); GENTSCH, Dietmar, 40882 Ratingen (DE)
(74) Vertreter: Maiwald Patent- und Rechtsanwaltsgesellschaft mbH

(57) **Zusammenfassung**

Die Erfindung betrifft ein Verfahren zur Herstellung von Schalterpolteilen bzw. Kunststoffbauteileinheiten für Nieder- Mittel - und Hochspannungsschaltanlagen, sowie Schalterpolteil selbst gemäß Oberbegriff der Patentansprüche 1 und 11.

Um eine einfachere Fertigung mit einer höheren Varianz an Materialeigenschaften zu erhalten, ist erfindungsgemäß vorgeschlagen, dass die äußere Isolationshülle in einem Kunststoffspritzgussverfahren hergestellt wird, indem eine Vakuumschaltkammer umspritzt wird.

## Beschreibung

Die Erfindung betrifft ein Verfahren zur Herstellung von Schalterpolteilen für Nieder-Mittel- und Hochspannungsschalter und Anlagen, sowie Schalterpolteil selbst, gemäß des Oberbegriff des Patentansprüche 1 und 11.

Schalterpolteile oder Kunststoffbauteileinheiten der eingangs beschriebenen Art umfassen Vakuumschaltkammern, welche in isolierendes Material eingebettet beziehungsweise mit diesem umgossen werden. Die Vakuumschaltkammern (VK) selber bestehen im wesentlichen aus einem keramischen Werkstoff (Isolator) der in der Regel zylindrisch ausgestaltet ist und an den Enden in den meist Fällen mit metallischen Deckel verschlossen ist. Auf der beweglichen oder den beweglichen Seiten ist am Deckel ein Faltenbalg angeordnet, der eine Bewegung eines oder auch beider Kontaktstücke über eine Stromzuleitung innerhalb der Vakuumschaltkammer ermöglicht. Die Stromzuleitung wird über eine Antriebsstange so geführt, dass die Kontaktstücke innerhalb des Vakuums der VK geöffnet oder geschlossen werden können. Wie gesagt befindet sich innerhalb der Vakuumschaltkammern eine Vakuumatmosphäre, damit ein möglichst rasches Löschen des beim Ein- und Ausschalten entstehenden Lichtbogens gewährleistet werden kann.

Diese Vakuumschaltkammern werden üblicherweise mit einer duroplastischen Epoxydharzmischung (bei Umgebungsdruck bzw. wenigen bar) umgossen, die zur Erhöhung der dielektrischen Außenfestigkeit einer Vakuumschaltkammer beiträgt und eine mechanische Funktionen übernimmt. Des Weiteren kann die Vakuumschaltkammer mit einem gummielastischen Werkstoff ebenfalls zur Steigerung der dielektrischen Außenfestigkeit ummantelt werden.

Der keramische Isolator einer Vakuumschaltkammer sowie das umgossene Epoxydharz haben jedoch einen deutlich unterschiedlichen Wärmeausdehnungskoeffizienten, was zur Folge hat, dass, wenn die Vakuumschaltkammern direkt in Epoxydharz eingegossen werden, diese Epoxydharzhülle bei entsprechender thermischer Wechselbeanspruchung rissempfindlich bleibt. Zudem ist der Herstellungsprozess dem Gießharzumgusswerkstoff angepasst. Die Herstellungszeiten (Zykluszeit) eines jeden Bauteiles, z.B. im Vakuumvergussverfahren oder Druckgelierverfahren hergestellt, sind entsprechend lang bis zur Aushärtung des Bauteils und dessen Entnahme.

Zur Vermeidung einer möglichen Rißiniziierung ist es im Stand der Technik bekannt und vorgesehen, eine so genannte Dämpfungsschicht oder eine Kompensationsschicht zum Ausgleich dieser unterschiedlichen Wärmeausdehnungskoeffizienten zwischen Vakuumschaltkammeroberfläche und Epoxydharzhülle einzubringen. Hierzu werden meist Elastomere wie Gummi oder Hartgummiwerkstoffe verwendet, die als Manschetten ausgebildet sind, oder zuvor aufgegossen wurden und über die Vakuumschaltkammern gebracht werden, bevor diese in eine entsprechende Gießform gegeben und mit Epoxydharz (meistens mit einem Füllstoff) umgossen werden. Die besagte Kompensationsschicht wird dabei mit in den entstehenden Verbund eingegossen.
Dieses an sich vorteilhafte Fertigungsverfahren verhindert das ein Reißen der Epoxydharzummantelung nach einem Verguss bzw. bei Wechseltemperaturbeanspruchung auftreten kann.

Die Herstellung einer Epoxidharzummantelung als solche bleibt aber extrem aufwändig.

Der Erfindung liegt daher die Aufgabe zugrunde ein Verfahren zur Herstellung von Vakuumschaltkammerpolteilen dahingehend zu verbessern, dass das Fertigungsverfahren an sich einfacher, und das so hergestellte Schalterpolteil allen technischen Anforderungen entspricht, und ein entsprechendes Schalterpolteil zur Verfügung stellt.

Die gestellte Aufgabe ist bei einem Verfahren der gattungsgemäßen Art erfindungsgemäß durch die kennzeichnenden Merkmale des Patentanspruches 1 gelöst.

Weitere vorteilhafte Ausgestaltungen sind in den abhängigen Ansprüchen 2 bis 10 angegeben.

Im Hinblick auf ein Schalterpolteil ist die gestellte Aufgabe erfindungsgemäß durch die kennzeichnenden Merkmale des Patentanspruches 11 gelöst.

Weitere vorteilhafte Ausgestaltungen sind in den übrigen abhängigen Ansprüchen angegeben.

Kern der verfahrensgemäßen Erfindung ist dabei, dass die äußere Isolationshülle in einem Kunststoffspritzgussverfahren hergestellt wird, indem eine Vakuumschaltkammerkammer umspritzt wird. Hierbei liegt die Besonderheit in der Anwendung der Spritzgusstechnologie. Diese grenzt sich dabei erheblich von der Epoxidharzverguss-Technologie ab. Beim Kunststoffpritzguss werden üblicherweise Drücke verwendet in der Größenordnung größer 80 bar. Die Prozesstemperaturen liegen bei ca. 160 °C. Unter diesen Bedingungen, insbesondere bei diesen Drücken eine Vakuumschaltkammer zu umspritzen wurde bisher deshalb vermieden, weil zum einen die im wesentlichen aus keramischem Werkstoff bestehende Vakuumschaltkammer diesem Druck nicht standhalten könne, und zum anderen zumindest die Vakuumschaltkammer hernach keine ausreichende Vakuumatmosphäre mehr haben könnte. Erste Überlegungen besonders praktische Versuche haben jedoch gezeigt, dass dies entgegen den technischen Erwartungen möglich ist.

Damit eröffnen sich vielfältige fertigungstechnologische Möglichkeiten. Unter anderem auch, dass die durch Kunststoff im allgemeinen erzielbaren isolatorischen und dielektrischen Eigenschaften optimal sind. Ganz besonders vorteilhaft ist aber das Wärmeausdehnungsverhalten der auf diese Weise verarbeitbaren und einsetzbaren Kunststoffe. Somit erfüllt die im Kunststoffspritzguss erstellte Umhüllung der Vakuumschaltkammer kummulativ alle Anforderungen und darüber hinaus sind die nunmehr einstellbaren Materialparameter extrem variabel und an die technischen Anforderungen anpassbar.

Mit dem erfindungsgemäßen Einsatz dieser Technologie eröffnen sich nunmehr einige Möglichkeiten auch in der Varianz einsetzbarer Materialien.

Dabei können nun eine Vielzahl von bekannten Thermoplasten verwendet werden. Dies ist in diesem Zusammenhang erheblich verschieden von Expoxidharzverguss, weil dies ein spezieller Duroplast ist.
Mit Thermoplasten werden die meisten modernen kunststoffspritzgussfähigen Kunststoffe erfasst. Durch die erfindungsgemäße Einbeziehbarkeit von nunmehr auch Thermoplasten können Isolationshüllen für Vakuumschaltkammern nunmehr technisch an alle möglichen Bedingungen individuell angepasst werden. Dies ist mit Epoxidharzen nicht, oder nur sehr eingeschränkt möglich.

Weiterhin können nach dem genannten Verfahren Duroplasten verarbeitet werden. Dabei liegt die Betonung erfindungsgemäß auf der Spritzgusstechnologie. Nicht etwa ein Epoxidharzverguss der herkömmlichen Art.

Mit dem erfindungsgemäßen Verfahren können für den genannten Zweck auch Gummielastische Kunststoffe verarbeitet werden.

Bei dem erfindungsgemäßen Verfahren kann auch weiterhin eine Kunststoffumbettung des Bauteiles bzw. der Einheit vorgesehen sein, die diese mit einer Kompensationsschicht ummantelt.

In weiterer vorteilhafter Ausgestaltung ist angegeben, dass zur Erzielung guter Hafteigenschaften ein Haftvermittler im Bereich einer oder auch mehrerer Grenzschichten eingesetzt wird. Mit diesem wird die dauerhafte Anhaftung der Oberflächen aneinander gewährleistet, was bei der Isolation aus dielektrischen Gründen besonders wichtig ist.

Eine gute Haftung kann auch dadurch erreicht werden, dass z.B. durch Tauch-, Spritz-, Lackier- oder Plasmaverfahren die Grenzflächen dotiert werden können, so dass eine entsprechend gute Haftung an den Grenzflächen erzeugt wird.

In weiterer vorteilhafter Ausgestaltung ist angegeben, dass die Isolationshülle des Schalterbauteil aus mindestens zwei Kunststoffschichten besteht, die nacheinander aufgebracht werden. Damit entsteht ein Verbundwerkstoff, der in geeigneter Weise an besondere Forderungen angepasst werden kann. Dies ist bei Schalterpolteilen nunmehr durch den erfindungsgemäßen Einsatz der Kunststoffspritzgusstechnologie besonders einfach möglich.

In weiterer vorteilhafter Ausgestaltung ist angegeben, dass zunächst eine gummielastische Schicht auf das Bauteil bzw. die Vakuumkammer aufgebracht wird, die mit einem Kunststoff umspritzt werden und nachfolgend weitere Schichten aus einem Kunststoff erhält.

In weiterer vorteilhafter Ausgestaltung ist angegeben, dass zur Angleichung des Ausdehnungskoeffinzienten der Isolationshülle an den Werkstoff der Vakuumschaltkammer, der Kunststoff vor Einbringung in den Spritzguss mit Zusatzstoffen wie Partikeln, Kugeln, Hohlkugeln oder Fasern aus keramischen Werkstoffen oder Glas vermengt wird. Mit diesen Zusatzstoffen können auf sehr einfache Weise individuelle Materialeigenschaften auf sehr einfach Weise gestaltet werden.

Fertigungstechnisch ist dies besonders fortschrittlich, dass die Schalterpolteile nunmehr mit einem spritzgussfähigem, duroplastischen Kunststoff umgossen werden. Werden entsprechende Kunststoffe (auch mit Füllstoffen: Teilchen und / oder Fasern) gewählt, können diese auch einen vergleichbaren Wärmeausdehnungskoeffizient wie das verwendete Metall beziehungsweise der keramische Werkstoff aufweisen. Zu den spritzgusstechnisch verarbeitenden Kunststoffen gehören: rieselfähige Materialien, Feuchtpressmassen und andere.

Dabei ist besonders überraschend gemäß der Erfindung eine Vakuumschaltkammer, die im Wesentlichen aus einem keramischen Werkstoff besteht, überhaupt unter den Bedingungen des Kunststoffspritzgusses ummanteln zu können. Die im Kunststoffspritzguss auftretenden Parameter bedeuten einer enorm höhere Beanspruchung der Vakuumschaltkammer. Dabei wird nämlich völig anders als bei Epoxidharzverguss mit mehr als 100 bar Druckbeaufschlagung gearbeitet.

Lange versuchsreihen hierzu haben aber das überraschende Ergebnis geliefert, dass dies ohne das die Vakuumschaltkammer zerstört wird, möglich ist.

Bei der Verwendung derartiger Massen ergibt sich, dass, anders als bei Epoxydharz, wegen der Ähnlichkeit der Wärmeausdehnungskoeffizienten nunmehr zusätzlich auch eine sehr dünnwandige Kompensationsschicht zur Sicherstellung einer dielektrisch dichten Fuge (z.B. ein Haftvermittler) gewählt werden kann. Im einfachsten Fall wird jedoch keine Kompensationsschicht gewählt. Temperaturwechselbeanspruchungen führen nunmehr nicht mehr zu einem Reißen des Vergussmantels. Die Vergussmasse aus den genannten duroplastischen Spritzgußmaterialen können direkt an die Vakuumschaltkammer oder auch auf eine sehr dünnwandige Kompensationsschicht aufgespritzt werden, die sich auf der Oberfläche der einzugießenden Einheit befinden.

Gemeint sind mit den an sich bekannten Verfahren des Spritzgusses sind auch Spezialspritzgussverfahen wie Preß-, Spritzpreß- oder Spritzgussverfahren gleichermaßen gemeint. Die verarbeitbaren Materialen können als Granulat, Stäbchen, teigartigen oder auch flüssigen Massen vorliegen. Neben einem "einlagigen" kann auch ein "mehrlagiges" Umspritzen bzw. Umgießen zur Herstellung des Bauteiles durchgeführt werden. Die Kunststoffe können zudem einen vergleichbaren Wärmeausdehnungskoeffizient wie das verwendete Metall beziehungsweise der keramische Werkstoff aufweisen auch unter Verwendung von Füllstoffen: z.B. Teilchen, Kugeln, Hohlkugeln und / oder Fasern.

Beim Umgießen einer Vakuumschaltkammer mit einem gummielastischen Werkstoff ist der Herstellungsprozess dem entsprechenden Werkstoff angepasst. Die Herstellungszeiten (Zykluszeit) eines jeden Bauteiles, z.B. im Handverguss-, Vakuumverguss- oder Niederdruckverfahren hergestellt, sind entsprechend lang bis zur Aushärtung des Bauteils und dessen Entnahme.

Auch die Verwendung gummielastischer Werkstoffe im direkten Spritzgussverfahren sind vorteilhaft. Werden entsprechende Materialien (auch mit Füllstoffen: Teilchen, Kugeln, Hohlkugeln und / oder Fasern) gewählt, können diese neben der Steigerung der dielektrischen Außenfestigkeit der Einheit auch mechanische Funktionen übernehmen. Zu den spritzgusstechnisch verarbeitenden Materialien gehören z.B. Silikonwerkstoffe und andere.

Zur Erzielung guter Hafteigenschaften können besagten Haftvermittler verwendet werden.
Möglichkeiten hierzu bestehen darin, durch Tauchverfahren die Grenzflächen zu dotieren, so dass eine entsprechend gute Haftung an den Grenzflächen erzeugt wird. Damit wird die Fertigung deutlich vereinfacht. Dies wird daran deutlich, wenn man die nunmehr erfindungsgemäß vorliegenden Fertigungsschritte mit denen aus dem Stand der Technik vergleicht.

Bei dem erfindungsgemäßen Verfahren wird die entsprechend präparierte Vakuumschaltkammer in eine Spritzgussform eingelegt und sodann der duroplastische oder gummielastische Kunststoff direkt auf die entsprechende Einheit aufgebracht. Die Aushärtungszeit des in diesem Verfahren hergestellten Bauteiles ist gegenüber der Reaktionszeit des mit Epoxydharz hergestellten Bauteiles kürzer. Beim Epoxydharz müssen mehrere Basiskomponenten, nämlich Harz, Härter, Füllstoff, Beschleuniger, Flexibilisator, und Farbstoff beigegeben werden, welche erst in Gänze das Gießharz ergeben und in einer beheizten Form miteinander reagieren (zumindest ein Teil). Es ist erforderlich, dass Harz, Härter, Füllstoff, der organisch oder anorganisch sein kann, unter Vakuum und entsprechender Temperatur, Zugabe eines Beschleunigers und ggfs. Additiven in ein reaktives Gemisch versetzt werden. Für die vollständige Vernetzung muss das Bauteil eine Nachhärtung erfahren, die mehrere Stunden lang sein kann.

Im Gegensatz dazu macht die duroplastische Spritzgusstechnik oder auch unter Verwendung eines gummielastischen Werkstoffes diesen Verfahrensschritt aus dem Stand der Technik gänzlich obsolet und liefert im Ergebnis dennoch ein Polteil, welches die oben genannten Eigenschaften aufweist und zudem temperaturwechselbeständig ist, ebenso wie ein mit Epoxydharz ummanteltes Polteil mit Kompensationsschicht.

Insgesamt ergeben sich die Vorteile beim erfindungsgemäßen Verfahren darin, dass mit geringer Wandstärken gearbeitet werden kann, größere Freiheitsgrade bei der Formgestaltung der Bauteile geboten sind und bei entsprechend gewählten kleinen Wandstärken ein geringeres Bauteilgewicht erreicht werden kann, so dass insgesamt auch ein geringerer Materialeinsatz erforderlich ist.

In der Kunststoffspritzgusstechnik sind Maßgenauigkeiten und ein hoher Standard im Bereich der Qualitätssicherungsmaßnahmen bei der Bauteilproduktion deutlich höher, als beim Epoxydharzverguss. In der Fertigung lassen sich kurze Zykluszeiten realisieren, die zu einer Erhöhung der Fertigungskapazität führen (Produktivität). Dadurch werden geringere Stückkosten bei der Herstellung von Kunststoffbauteileinheiten erzielt. Dieser Prozess lässt sich zudem leicht unter Zuhilfenahme von verfügbaren Standardkomponenten automatisieren.

Die genannten Vorteile verkörpern sich an dem erfindungsgemäßen Schalterpolteil.

Die Erfindung ist in der Zeichnung dargestellt und nachfolgend näher beschrieben.

Es zeigt:
- Figur 1:: Schnittdarstellung Polteil mit Vakuumschaltkammer
- Figur 2:: mit Kompensationsschicht
- Figur 3:: mit mehrlagiger Kunststoffbeschichtung
- Figur 4:: mit Gradientenbereich

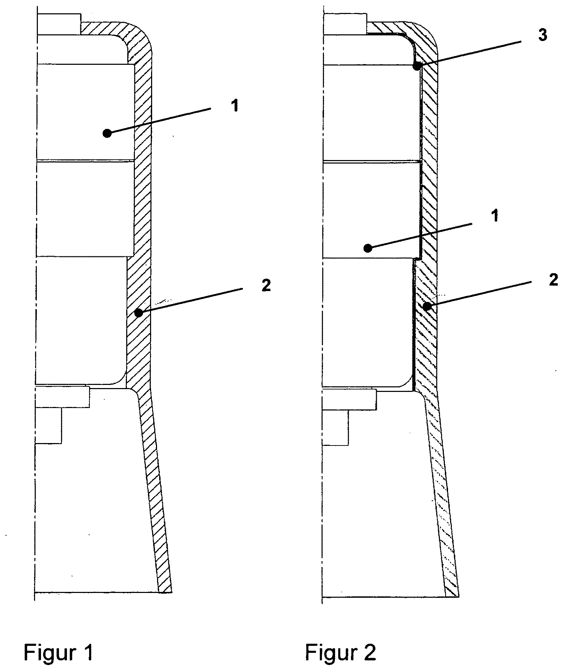

Figur 1 zeigt schematisch eine Vakuumschaltkammer. Kontaktstücke und Antriebsbauteile wie auch Antriebsstangen sind nicht dargestellt. Vakuumschaltkammer und Anschlusskontakte werden in eine Spritzgussform eingelegt, fixiert und danach umspritzt. Hierbei kann die Vakuumschaltkammer zur Grenzflächendotierung und zur besseren Haftung mit einem Haftvermittler, Vermittlungsstoffen oder Dotierstoffen versehen werden, die über die Eindringtiefe zur Vakuumschaltkammergrenzfläche und in den Kunststoff eine entsprechende mechanische und haftschlüssige Verbindung schaffen.

Am Ende des Spritzgussvorganges wird die Form geöffnet und das fertige Schalterpolteil entnommen.

In der Figur 1 ist daher die Skizze eines Polteiles bestehend aus einer Vakuumschaltkammer (1) und dem Umguss (2) gezeigt. Der Umguss (2) zeigt im Querschnitt den duroplastischen oder gummielastischen Kunststoff, der in einer Form auf das Bauteil (1) gespritzt wird.

Die Figur 2 zeigt auf der hier dargestellten Vakuumschaltkammer (1) eine Kompensationsschicht, die wie oben beschrieben auf das einzugießende Bauteil aufgebracht wird. Auf die Kompensationsschicht (3) wird der duroplastische oder gummielastische Kunststoff aufgespritzt

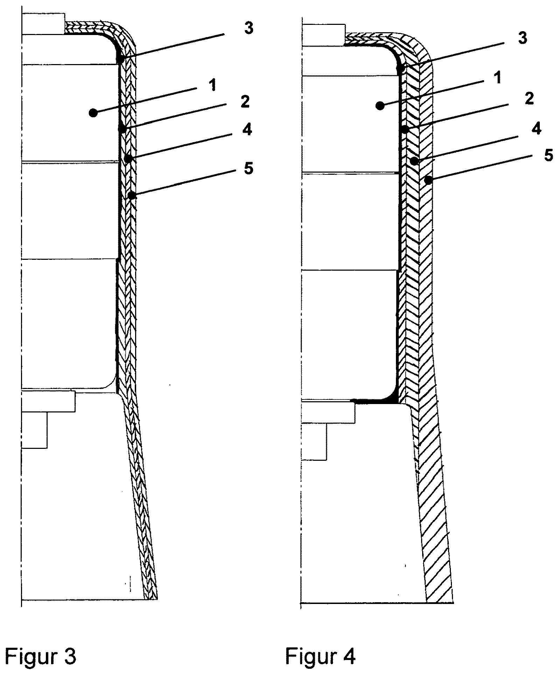

In der Figur 3 ist ein Polteil dargestellt, das neben der Vakuumschaltkammer (1) mit mehreren Lagen Kunststoff beschichtet ist. Die Vakuumschaltkammer kann mit einer Kompensationsschicht (3) beschichtet sein. Es besteht jedoch auch die Möglichkeit, dass das Bauteil nach Figur 1 nicht beschichtet ist. Das heißt, die Mehrlagigkeit wird durch die Kunststoffschichten (2, 4, und 5) gebildet

Es kann auch ein Gradientenbereich vorliegen, wie es in der Figur 4 dargestellt ist.

## Patentansprüche

1. Verfahren zur Herstellung von Schalterpolteilen mit Vakuumschaltkammer (1) und äußerer Isolationshülle (2) für Mittel- und Hochspannungsschalter, wobei die äußere Isolationshülle (2) in einem Kunststoffspritzgussverfahren hergestellt wird,
**dadurch gekennzeichnet, dass** die Vakuumschaltkammer (1) bei einem Druck oberhalb von 80 bar mit einem Thermoplasten umspritzt wird, wobei zur Erzielung guter Hafteigenschaften ein Haftvermittler im Bereich mindestens einer Grenzschicht zwischen oberflächenbenachbarter Schichten eingesetzt wird, indem durch Tauch-, Spritz-, Lackier- oder Plasmaverfahren die Grenzflächen dotiert werden, so dass eine entsprechend gute Haftung an den Grenzflächen erzeugt wird.

2. Verfahren nach Anspruch 1,
**dadurch gekennzeichnet, dass** vor der Kunststoffumbettung des Bauteils, dieses mit einer Kompensationsschicht (3) ummantelt wird.

3. Verfahren nach einem der vorhergehenden Ansprüche,
**dadurch gekennzeichnet, dass** die Isolationshülle (2) des Schalterbauteils aus mindestens zwei Kunststoffschichten (2, 4, 5) besteht, die nacheinander aufgebracht werden.

4. Verfahren nach einem der vorstehenden Ansprüche,
**dadurch gekennzeichnet, dass** zunächst eine gummielastische Schicht auf das Bauteil bzw. die Vakuumkammer (1) aufgebracht wird, die mit einem Kunststoff umspritzt wird und nachfolgend weitere Schichten aus einem Kunststoff erhält.

5. Verfahren nach Anspruch 4,
**dadurch gekennzeichnet, dass** zur Angleichung des Ausdehnungskoeffizienten der Isolationshülle (2) an den Werkstoff der Vakuumschaltkammer (1), der Kunststoff vor Einbringung in den Spritzguss mit Zusatzstoffen, wie Partikeln, Kugeln, Hohlkugeln oder Fasern aus keramischen Werkstoffen oder Glas vermengt wird.
